Europäisches Patentamt

European Patent Office

Office européen des brevets

(19)

(11) Veröffentlichungsnummer: **0 298 987**
**B1**

(12) **EUROPÄISCHE PATENTSCHRIFT**

(45) Veröffentlichungstag der Patentschrift: **27.12.90**

(51) Int. Cl.⁵: **B 60 N 2/00**

(21) Anmeldenummer: **87902312.5**

(22) Anmeldetag: **11.05.87**

(86) Internationale Anmeldenummer:
**PCT/AT87/00034**

(87) Internationale Veröffentlichungsnummer:
**WO 87/06894 19.11.87 Gazette 87/25**

(54) SITZ, INSBESONDERE FÜR ÖFFENTLICHE VERKEHRSMITTEL.

(30) Priorität: **09.05.86 AT 1248/86**

(43) Veröffentlichungstag der Anmeldung:
**18.01.89 Patentblatt 89/03**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**DE-A-3 111 839**
**DE-U-8 506 816**
**GB-A-2 045 072**
**GB-A-2 137 492**
**US-A-4 031 579**

**Patent Abstracts of Japan, volume 8, No 182
(M-319) (1619) 22 August 1984**

(73) Patentinhaber: **SCHAUMSTOFFWERK GREINER
GESELLSCHAFT M.B.H.
Krift 5
A-4550 Kremsmünster (AT)**

(72) Erfinder: **EDER, Bernhard
Gaumbergstrasse 84a
A-4020 Linz/Donau (AT)**

(74) Vertreter: **Wolke, Heidemarie, Dr.
Stadtplatz 7
A-4400 Steyr (AT)**

**Beschreibung**

Die Erfindung betrifft einen Sitz, insbesondere für offentliche Verkehrsmittel, mit einem Traggestell und mit einer aus mehreren Schichten bestehenden Polsterung, die einen schwer entflammbaren Bezugstoff und ein aus Kunststoffschaum bestehendes, mit einem Flammschutzmittel versetztes Stützelement umfaßt sowie ein Verfahren zur Herstellung eines derartigen Sitzes.

Es sind bereits Sitze für öffentliche Verkehrsmittel bekannt — gemäß DE—U—85 06 816 — die einen Sitzpolster aufweisen, der mit einem Sitzbezug abgedeckt ist, wobei der Sitzbezug und der Sitzpolster aus einem schwer entflammbaren und raucharmen Material bestehen. Vielfach wird dabei so vorgegangen, daß zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, daß in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, daß eine Orientierung für Insassen kaum mehr möglich ist. Dementsprechend ist bei diesem bekannten Sitz vorgesehen, daß unterhalb des Sitzpolsters in dem Traggestell des Sitzes eine feuerhemmende Platte angeordnet wird. Dies bedingt die Verwendung eines speziellen Profiles zur Halterung des Sitzpolsters sowie einen zusätzlichen Aufwand durch die Anordnung der feuerhemmenden Platte.

Der Erfindung liegt die Aufgabe zugrunde, einen Sitz, insbesondere für öffentliche Verkehrsmittel zu schaffen, dessen Polsterung auch bei direkter Flammeinwirkung auf eine aus Kunststoffschaum bestehende Stützschicht selbstverlöschend ist und während der Flammeinwirkung eine möglichst geringe Rauchentwicklung zeigt.

Diese Aufgabe der Erfindung wird dadurch gelöst, daß zwischen dem Bezugstoff und dem Stützelement eine weitere aus Polyätherschaum bestehende Zwischenschicht angeordnet ist, die mit Flammschutzmittel getränkt ist und der Kunststoff des Stützelementes mit einem pulverförmigen Flammschutzmittel versetzt ist. Durch das Versetzen des Stützelementes mit einem pulverförmigen Flammschutzmittel wird neben der Herabsetzung der Rauchgasdichte auch erreicht, daß diese Stützschicht nicht brennend abtropfend ist. Dadurch wird verhindert, daß auch beim Brennen des Stützkörpers keine brennenden Bestandteile auf den Boden abtropfen und beispielsweise den Bodenbelag entzünden können.

Gemäß einer weiteren Ausführungsform ist vorgesehen, daß der Kunststoff für das Stützelement durch Formkaltschaum gebildet ist und ein Raumgewicht von 40 bis 80 kg/m³ aufweist und 100 Gewichtsteile Formkaltschaum mit ca. 20 bis 50, bevorzugt mit ca. 35 Gewichtsteilen pulverförmigem Flammschutzmittel versetzt sind. Durch die Verwendung eines derartigen Schaumes wird erreicht, daß eine ausreichende Festigkeit gegeben ist und das Stützelement auch bei direkter Flammeinwirkung nicht brennend abtropft.

Nach einer anderen Ausführungsvariante ist vorgesehen, daß das Stützelement mit ca. 50 bis 60 Gewichtsteilen pulverförmigen Flammschutzmittel versetzt ist, wodurch die Möglichkeit gegeben ist, bei einigen Arten von Bezustoffen direkt ein Stützelement aufzuschäumen und trotzdem eine hohe Festigkeit gegen das Durchfallen, eine verringerte Dochtwirkung und Rauchentwicklung erreicht und ein brennendes Abtropfen vermieden wird.

Vorteilhaft ist es hierbei, wenn das pulverförmige Flammschutzmittel durch Melaminharz und bzw. oder Aluminiumhydroxyd und bzw. oder Amonpolyphosphat gebildet ist, da bei Verwendung derartiger Materialien neben der feuerfesten und selbstverlöschenden Einstellung des Stützkörpers auch die Rauchgasdichte relativ nieder ist.

Von Vorteil ist es aber auch, wenn das pulverförmige Flammschutzmittel jeweils ca. zu gleichen Teilen durch Melaminharz und Aluminiumhydroxyd gebildet ist, wodurch eine gute Relation zwischen einem günstigen Abtropfverhalten und einer günstigen Rauchgasentwicklung erzielt wird.

Weiters ist es auch möglich, daß zwischen dem Bezugstoff und dem Stützelement eine weitere aus Polyätherschaum bestehende Zwischenschicht angeordnet ist, die mit Flammschutzmittel getränkt ist. Durch die Kombination der verschiedenen Schichten und der zwischen der Stützschicht und dem Bezugstoff angeordneten Zwischenschicht aus Polyätherschaum, die mit Flammschutzmittel getränkt ist, wird in überraschender Weise erreicht, daß auch beim einem Aufschneiden des Bezugstoffes und einem Ablösen desselben von der darunterliegenden Zwischenschicht die Richtlinien für den vorbeugenden Brandschutz bei Personenfahrzeugen nach der BO-Strab—Brandschutzrichtlinien für Straßenbahnfahrzeuge—eingehalten werden. Bei einem derartigen Test wird der Bezugstoff aufgeschnitten und von der darunterliegenden Zwischenschicht abgelöst und in diesem Bereich ein brennendes Papierkuvert auf den Sitz aufgelegt. Dabei kommt es lediglich zu einer Verkohlung des die Zwischenschicht bildenden Polyätherschaumes, da durch die Tränkung mit dem Flammschutzmittel dieser Polyätherschaum keine Dochtwirkung für den Bezugstoff ausüben kann.

Weiters ist es aber auch möglich, daß das Stützelement parallel zur Beanspruchungsrichtung eine Dicke von 2 bis 10 cm aufweist, da dadurch bei entsprechend ausreichender Festigkeit für die Anwendung bei einer Polsterung auch ein Durchbrennen dieser Schichten im wesentlichen verhindert wird.

Nach einer anderen Ausführungsvariante ist vorgesehen, daß zwischen der Zwischenschicht und dem Stützelement eine feuchtigkeitsdichte Sperrfolie, insbesondere eine PE- oder PU-Folie, insbesondere mit einer Dicke von 50 µm angeordnet ist. Dadurch wird verhindert, daß der flüssige Kunststoff vor dem Aufschäumen in die Zwischenschicht eindringt und die Elastizität derselben verändert bzw. die Wirkungen der Flammschutzmittel nachteilig beeinflußt. Dabei wird aber eine Dampfdiffusion durch die porenartigen Öffnungen sichergestellt, sodaß trotzdem ein ausreichender Sitzkomfort erreicht wird.

Weiters ist es auch möglich, daß der Kunststoffschaum der Zwischenschicht ein Raumgewicht von 25 bis 35 kg/m³ und eine Dicke von 3 bis 8 mm aufweist. Durch die Wahl des Raumgewichtes und der Dicke dieser Zwischenschicht wird einerseits eine ausreichende Elastizität für den Sitz sichergestellt und andererseits ermöglicht, daß der Kunststoffschaum noch durchgehend ausreichend mit Flammschutzmittel getränkt werden kann, sodaß etwa über die gesamte Dicke dieser Zwischenschicht gleiche Verhältnisse hinsichtlich des Flammschutzes vorliegen.

Vorteilhaft ist es weiters auch, wenn der Kunststoff der Zwischenschicht mit 5 bis 10 Gewichtsteilen flüssigem, z.B. chlor-, brom- oder phosphorhaltigem Flammschutzmittel versetzt ist und zusätzlich mit einem flüssigen Flammschutzmittel getränkt ist, wodurch die Wirkung des Flammschutzes zusätzlich verbessert werden kann.

Nach einer anderen Ausführungsform ist vorgesehen, daß das flüssige Flammschutzmittel mit Aluminiumoxyhydrat vermischt ist, dessen Korngrößenverteilung vorzugsweise 4% 104 bis 40 µm, 45% bis 60% 40 bis 10 µm, 20 bis 45% 10 bis 2 µm und 5 bis 15% 2 bis 0,2 µm beträgt, wodurch ein Eindringen des Flammschutzmittels während des Tränkens des Kunststoffschaumes verbessert wird.

Es ist aber auch möglich, daß das flüssige Flammschutzmittel aus 100 Gewichtsteilen Polyurethan und ca. 80 Gewichtsteilen Al (OH)3 besteht und vorzugsweise die Viskosität der Mischung 390 cp/25°C beträgt und gegebenenfalls 0,18 Gewichtsteile Entschäumungsmittel und bzw. oder Farbpasten zugesetzt sind, wodurch eine durchgehende Benetzung der Oberfläche des Kunststoffschaumes erzielt und ein Flammschutz auch im Inneren der Zellstruktur des Kunststoffschaumes aufgebaut wird.

Vorteilhaft ist es weiters, wenn der Kunststoff der Zwischenschicht durch ein Polyäther gebildet ist und die Zwischenschicht einen Teil eines Kunststoffschaumblockes bildet. Dadurch, daß die Zwischenschicht als Platte aus einem Kunststoffschaumblock herausgeschnitten wird, ist der Dichteverlauf regelmäßig und es wird ein gleichmäßiges Eindringen des flüssigen Flammschutzmittels beim Tränken erreicht.

Weiters ist es auch möglich, daß der Bezugstoff mit der Zwischenschicht über eine Kleberschicht verbunden ist und die zwischen der Zwischenschicht und dem Stützelement angeordnete Sperrfolie an der Zwischenschicht festgeklebt und das Stützelement auf die Sperrfolie aufgeschäumt ist, wodurch eine sandwichartige Konstruktion erreicht wird, die eine höhere Festigkeit aufweist als die einzelnen geschäumten Schichten.

Schließlich ist es auch möglich, daß der Bezugsstoff und die Zwischenschicht sowie die Sperrfolie und das Stützelement ein selbsttragendes Sandwichelement bilden, wodurch eine Unterstützung der Sitzpolster nicht mehr erforderlich ist, da die gepolsterte Sitzschale direkt in ein Rohrtraggerüst hineingehängt werden kann.

Es ist auch möglich, daß der Bezugstoff durch einen Webvelour insbesondere mit einem Anteil von 70% Polyester und 30 Wolle oder durch Kunstleder gebildet ist und das Stützelement auf dem Bezugstoff aufgeschäumt ist, wodurch es bei diesen Bezugstoffen möglich ist, das Stützelement direkt aufzuschäumen.

Nach einer anderen Ausführungsvariante ist es auch möglich, daß der Bezugstoff durch ein Polyester-Wolle-Gewirke insbesondere mit Anteil von 70% Polyester und 30% Wolle oder durch reine Wolle gebildet ist. Durch die erfindungsgemäße Kombination ist es nunmehr auch möglich, derartige Bezugstoffe für Sitze zu verarbeiten, wodurch ein universeller Einsatz der unterschiedlichsten Bezugstoffe möglich wird.

Weiters ist die Herstellung der Stützelemente für die Sitze mit einer Maschine möglich, be der ein Mischkopf mit einem Vorratsbehälter für Polyol, einem Vorratsbehälter fur Isozyanat und einem Vorratsbehälter für ein Gemisch von 50 Gewichtsteilen Melaminharz und Aluminiumhydroxyd und 50 Gewichtsteilen Polyol und einem weiteren Vorratsbehälter mit einem z.B. durch Frigen oder Fluortrichlormethan gebildeten Treibmittel verbunden ist. Durch die Verwendung eines eigenen Mischbehälters für das Flammschutzmittel kann in diesem ein Gemisch mit Polyol eingelagert werden, welches eine so hohe Konzentration an Flammschutzmittel aufweist, die ein Mischen von Flammschutzmittel und Polyol verhindert.

Von Vorteil ist es hierbei, wenn das in den Vorratsbehältern verwendete Polyol gleiche Zusammensetzung aufweist.

Von Vorteil ist auch ein Verfahren zum Herstellen eines Sitzes, insbesondere für öffentliche Verkehrsmittel, bei welchem ein Stützelement aus einem mit Flammschutzmitteln versehenen Kunststoff in einer Form geschäumt und mit einem schwer entflammbaren Bezugstoff verbunden wird.

Dieses Verfahren ist dadurch gekennzeichnet, daß das Stützelement auf eine mit einer ebenfalls aus Kunststoffschaum bestehenden Zwischenschicht verbundene Sperrfolie aufgeschäumt wird und daß nach dem Schäumen des Stützelementes von der Zwischenschicht in Richtung des Stützelementes insbesondere erhitzte Nadeln durch die Sperrfolie hindurch bis in den dieser zugewandten Bereich des Stützelementes eingedrückt und anschließend herausgezogen werden. Durch dieses Verfahren wird erreicht, daß ein unmittelbares Aufschäumen des Stützelementes auf die Zwischenschicht möglich ist und trotzdem ein atmungsaktiver Sitzpolster erreicht wird.

Weiters ist es auch möglich, daß die Nadeln verteilt über die gesamte Oberfläche der Zwischenschicht durch die Sperrfolie hindurchgedrückt werden, wodurch über die gesamte Sitzfläche verteilt ein angenehmes Sitzgefühl erreicht und eine Schweißbildung verhindert wird.

Von Vorteil ist es, wenn die Summe der Querschnittsflächen der mit den Nadeln zumindest in der Sperrfolie hergestellten Öffnungen einen Luftdurchsatz von 30 Liter/min ermöglichen, da damit bei Atmosphärebedingungen eine ausreichende Luftabfuhr aus dem Sitzbereich auch bei großen Temperaturunterschieden erzielt wird.

Nach einer anderen Ausführungsvariante des Verfahrens ist vorgesehen, daß auf der der Sperrfolie gegenüberliegenden Oberfläche der Zwischenschicht der flammfeste Bezugstoff aufkaschiert ist und daß der Bezugstoff vor dem Aufkaschieren befeuchtet und über ein räumliches Modell gedehnt und in der gedehnten Lage getrocknet wird, wodurch die Herstellung des Sitzes in einem einzigen Arbeitsgang und in Sandwichbauweise möglich ist.

Zum besseren Verständnis der Erfindung wird dies im folgenden anhand der in den Zeichnungen dargestellten Ausführungsbeispiele näher erläutert.

Es zeigen:

Fig. 1 einen Sitz in einem öffentlichen Verkehrsmittel mit einer erfindungsgemäß ausgebildeten Polsterung in schaubildlicher und vereinfachter schematischer Darstellung;

Fig. 2 die Polsterung nach Fig. 1 in schematischer schaubildlicher Darstellung teilweise geschnitten;

Fig. 3 einen Schnitt durch eine erfindungsgemäß ausgebildete Polsterung mit den unterschiedlichen Zellaufbauten der einzelnen Schichten in Stirnansicht.

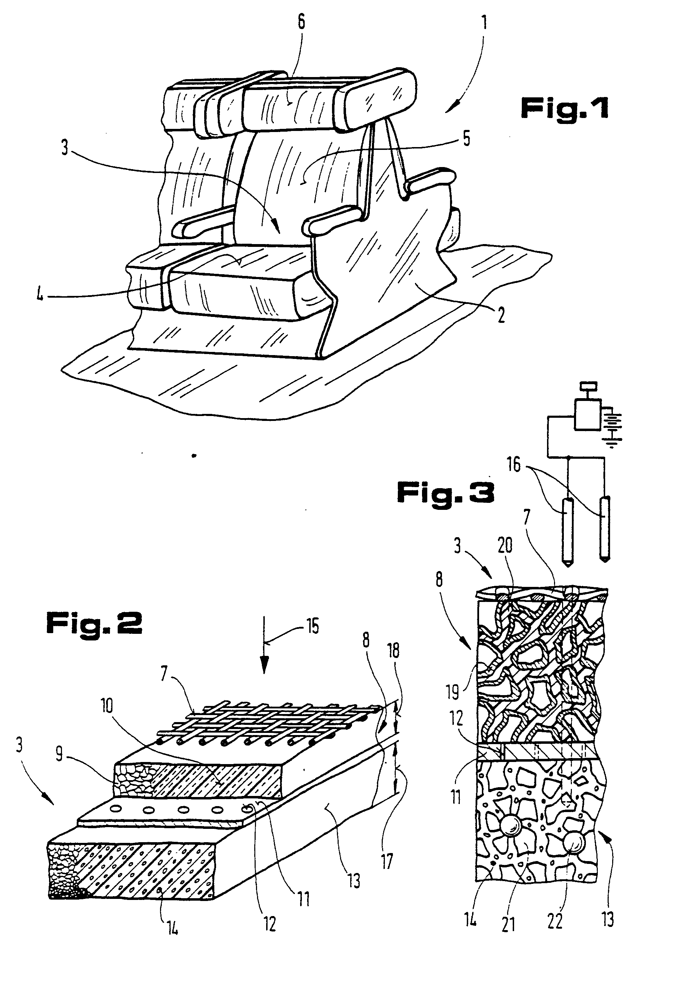

In Fig. 1 ist ein Sitz 1 beispielsweise in einem öffentlichen Verkehrsmittel, wie einer Straßenbahn, einem Eisenbahnwaggon oder einem Autobus dargestellt. Dieser Sitz 1 besteht aus einem Traggestell 2 und einer aus mehreren Schichten bestehenden Polsterung 3, die, wie beim dargestellten Ausführungsbeispiel einen Sitzpolster 4, einen Rückenpolster 5 und einen Kopfpolster 6 umfassen kann. Jeder dieser Sitzpolster, Rückenpolster und Kopfpolster 4,5 bzw. 6 besteht aus mehreren Schichten.

In Fig. 2 sind die Schichten, aus welchen die Sitz-, Rücken- und Kopfpolster 4 bis 6 bestehen im größeren Maßstab dargestellt. Die oberste Schicht der Polsterung 3 ist durch einen Bezugstoff 7, der schematisch als Gewirke dargestellt ist, gebildet. Die Herstellungsart bzw. Ausbildung des verwendeten Bezugstoffes ist nicht an die dargestellte Ausführungsform gebunden und beliebig wählbar. Bevorzugt besteht ein derartiger Bezugstoff jedoch aus 59% Wolle, 33% Baumwolle und 8% Polyester. Es ist aber auch möglich, Bezugstoffe aus 81% Baumwolle und 19% Polyester zu verwenden. Derartige Bezugstoffe sind aus dem Stand der Technik bekannte und es können beliebige dafür in Frage kommende Bezugstoffe verwendet werden.

Unterhalb des Bezugstoffes 7 ist eine Zwischenschicht 8 angeordnet, die aus einem Kunststoffschaum, insbesondere einem Polyätherschaumstoff 9 gebildet ist. Das Rohmaterial dieses Polyätherschaumstoffes 9 ist mit einem flüssigen Flammschutzmittel 10, welches in der Zeichnung schematisch durch strichlierte Linien angedeutet ist, vermischt.

Auf der vom Bezugstoff 7 abgewendeten Seite der Zwischenschicht 8 ist eine Sperrfolie 11 angeordnet, die aus einer PE- bzw. PU-Folie besteht. Diese Folie ist zum besseren Verständnis mit in überproportionaler Vergrößerung dargestellten porenartigen Öffnungen 12 versehen. Durch diese porenartigen Öffnungen 12 soll eine "Atmung" dieser ansonst feuchtigkeitsdichten Sperrfolie 11 erreicht werden. Dadurch sollen günstige Sitzeigenschaften und eine Schweißbildung bei Benutzung der Polsterung durch eine Person verhindert werden. Andererseits soll erreicht werden, daß vor dem Aufschäumen eines aus Kunststoffschaum bestehenden darunterliegenden Stützelementes der flüssige Kunststoff nicht in die Zwischenschicht eintritt und dort aushärtet. Das Stützelement 13, welches beispielsweise aus einem Formkaltschaum gebildet ist, weist bevorzugt ein Raumgewicht von 40 bis 80 kg/m$^3$ auf. Weiters ist der Kunststoffschaum mit 20 bis 50 Gewichtsteilen, bevorzugt mit 35 Gewichtsteilen pulverförmigen Flammschutzmittel 14 versetzt, welches schematisch durch kleine Ringe in der Schnittfläche des Stützelementes 13 dargestellt ist. Das Flammschutzmittel 14 besteht aus einem Pulver aus Melaminharz und bzw. oder Aluminiumhydroxyd und bzw. oder Amonpolyphosphat. Das Stützelement 13 wird bevorzugt unmittelbar auf die Sperrfolie 11 aufgeschäumt, wodurch ein fester Verbund zwischen der Zwischenschicht 8 und dem Stützelement 13 hergestellt wird. Durch die beim Aufschäumen des Stützelementes 13 auftretenden Exotherme kann die sehr dünne, bevorzugte 50 μm dicke PE- oder PU-Folie so stark erhitzt werden, daß sie mit der Oberfläche der Zwischenschicht 8 verklebt.

Bilden die Zwischenschicht, das Stützelement und die Sperrfolie sowie bevorzugt auch der Bezugstoff 7 ein einstückiges Sandwichelement, so wird meist eine durchgehende dichte Sperrfolie eingesetzt. Nach dem Aufschäumen des Stützelementes wird die Polsterung 3 dann genadelt, d.h., es werden in Belastungsrichtung—Pfeil 15—nadeln 16, die vorzugsweise auf eine Temperatur von 120°C bis 160°C aufgeheizt sind, eingestossen, die den Bezugstoff 7, die Zwischenschicht 8 sowie die Sperrfolie 11 durchdringen. Dadurch wird die notwendige Luftdurchlässigkeit hergestellt. Durch die Verwendung einer dichten Sperrfolie beim Aufschäumen des Stützelementes wird verhindert, daß in der flüssigen Phase des Kunststoffes dieser in die offenen Zellen der Zwischenschicht eindringt und innerhalb der Zwischenschicht ausreagiert, wodurch das Dämpfungsverhalten und auch der Widerstand gegen Flammeinwirkung nachteilig verändert werden würde. Andererseits ist es aber notwendig, einen ausreichenden Luftdurchsatz von beispielsweise ca. 30 Liter/min bei Atmosphärendruck einzuhalten, um die entsprechende Elastizität der Zwischenschicht zu gewährleisten und eine Schweißbildung beim Sitzen auf den Sitz zu vermeiden. Dies wird nun dadurch erreicht, daß nach dem Aufschäumen des Stützelementes 13 die Zwischenschicht 8 und die Sperrfolie 11 genadelt werden. Ist wie bei der vorliegenden Ausführungsform beispielsweise auch der Bezugstoff 7 bereits auf die Zwischenschicht 8 aufgebracht, so wird dieser mitgenadelt. Das Nadeln erfolgt derart, daß eine oder mehrere Nadeln über die gesamte Sitzoberfläche verteilt durch den Bezugstoff 7, die Zwischenschicht 8 und die Sperrfolie 11 hindurchgedrückt werden. Nachdem es sich bei der Sperrfolie 11 meist um eine PE- bzw. PU-Folie handelt, die sehr zähelastisch ist, kann es dazu kommen, daß nach dem Durchdrücken und Herausziehen der Nadeln die Öffnungen durch die Elastizität des umgebenden Kunststoffes fast zur Gänze wieder verschlossen werden. Dadurch empfiehlt es sich, geheizte Nadeln einzusetzen, die während des Einstechens eine Temperatur von 120°C bis 160°C aufweisen und somit die Sperrfolie durchschmolzen wird und eine Öffnung mit einem Querschnitt der Nadel nach dem Herausziehen der Nadel aus dem Sitz beibehalten wird. Um diese Nadeln entsprechend erwärmen zu können, können diese—wie schematisch angedeutet—mit einem Steuergerät verbunden sein, um diese Nadeln beispielsweise elektrisch zu erwärmen. Es ist aber jederzeit auch möglich, jede beliebige andere Heizvorrichtung, beispielsweise umlaufende heiße Gase oder Flüssigkeiten zu verwenden, um die entsprechende Temperierung der Nadeln zu erreichen oder diese Nadeln außerhalb der Polsterung auf die entsprechende Temperatur zu erhitzen und im erhitzten Zustand dann in die Polsterung einzudrücken.

Wie aus der Darstellung insbesondere aus Fig. 3 zu ersehen ist, wird das Stützelement durch einen im wesentlichen offenzelligen Kunststoff gebildet, wobei auch die der Sperrfolie gegenüberliegende Oberfläche zum Großteil offene Zellen aufweist. Dadurch wird auch der Durchtritt der Luft im Anschluß an die Sperrfolie in Belastungsrichtung—Pfeil 15—nicht behindert.

Wie in Fig. 2 bereits schematisch angedeutet ist, weist das Stützelement in Belastungsrichtung—Pfeil 15—eine größere Dicke 17 auf als eine Dicke 18 der Zwischenschicht 8. Dadurch kann die Festigkeit der einzelnen Polsterung 3 auf die gewünschten Werte abgestellt werden und es ist auch möglich durch die Wahl der Dicke 18 der Zwischenschicht 8 das Federungsverhalten der Polsterung im Sitzbereich zu verändern.

In Fig. 3 ist anhand eines Schnittes durch eine Polsterung 3 noch gezeigt, daß die zwischen dem Bezugstoff 7 und der Sperrfolie 11 angeordnete Zwischenschicht 8 aus einem Kunststoffschaum mit überwiegend offenen Zellen—also einem schwammartigen Kunststoff und somit einem Weichschaumstoff—besteht. Um das Flammschutzverhalten dieses unmittelbar unter dem Bezugstoff 7 angeordneten Kunststoffes entsprechend zu verbessern, wird die Zwischenschicht 8, die bevorzugt aus Polyätherschaumstoff 9 mit einem Raumgewicht von 15 bis 35 kg/m$^3$ besteht und eine Dicke von 3 bis 8 mm aufweist, mit einem flüssigen Flammschutzmittel 19 getränkt. Um die Wirkung dieses Flammschutzmittels besser erläutern zu können, wurde im Bereich der Schnittfläche die offene Zellstruktur 20, welche am besten mit einem räumlichen Fachwerk verglichen werden kann, schematisch dargestellt. Durch das Tränken wird diese Zellstruktur, also die das Raumfachwerk bildenden Stege allseitig mit dem Flammschutzmittel 19 überzogen. Dadurch wird das Brandverhalten bereits in der ersten Phase einer Flammeinwirkung verbessert. Dazu kommt noch, daß selbst bei einer Zerstörung dieser aus Flammschutzmitteln 19 bestehenden Schutzschicht auch in dem die Zellstruktur bildenden Kunststoff, wie bereits in Fig. 2 erläutert, ein flüssiges Flammschutzmittel eingemischt ist, welches in dem aufgeschäumten Material bereits enthalten ist. Durch die Kombination dieser beiden Flammschutzmittel wird erreicht, daß nicht nur das Brandverhalten, sondern vor allem auch die Rauchentwicklung und die Rauchgasdichte bei der Flammentwicklung gezielt gesteuert werden kann.

Auch das Stützelement 13 besteht aus einem Kunststoff, der zum überwiegenden Teil offene Zellen 21 aufweist. Auch in einem derartigen, mit überwiegend offenen Zellen 21 versehenen Kunststoffmaterial sind zwischendurch einzelne geschlossene Zellen 22 vorgesehen. Dieses Kunststoffmaterial ist mit in das Rohmaterial vor dem Aufschäumen eingemischten festen Flammschutzmitteln 14 versetzt, die das Brandverhalten und auch die Rauchgasbildung maßgeblich beeinflussen. Der Kunststoff des Stützelementes 13 ist jedoch nicht weich elastisch sondern hart eingestellt.

Dazu kommt, daß durch das Beimengen dieser pulverförmigen Flammschutzmittel auch das Abtropfverhalten des Kunststoffschaumes während der Flammeinwirkung so beinflußt werden kann, daß dieser nicht brennend abtropft und somit eine Sekundärzündung von unterhalb der Sitze angeordneten Werkstoffen oder Materialien zuverlässig verhindert wird.

Eine weitere wichtige und vorteilhafte Eigenschaft dieser Werkstoffkombination liegt darin, daß der Polyätherschaum der Zwischenschicht 8 für den an sich schwer entflammbaren Bezugstoff 7 keine Dochtwirkung ausüben kann, also immer wieder zu Folgezündungen führen kann, da aufgrund der Tränkung der Zwischenschicht 8 mit dem flüssigen Flammschutzmittel 19 keine Weiterleitung der Flammen möglich ist.

Eine Rohstoffmixtur für die Herstellung eines Kunststoffschaumes für die Zwischenschicht 8 kann beispielsweise aus 100 Gewichtsteilen Standardpolyol, 43 Gewichtsteilen TDI 8020, 11 Gewichtsteilen TDI 6535 (beispielsweise von der Firma Bayer) durch 0,12 Gewichtsteile Tertiäre Amine, 1,20 Gewichtsteile Stabilisatoren, 0,4 Gewichtsteile 10/2 Oktat und 8 Gewichtsteile flüssiges Flammschutzmittel bestehen. Ein derartiger Kunststoffschaum wird bevorzugt als Block hergestellt und nach der Aufschäumung in Platten oder Bahnen mit der gewünschten Schichtstärke geschnitten, wobei als Schichtstärke für die Zwischenschicht eine Dicke 18 von 3 bis 8 mm in Frage kommt.

Die Platten in der Dicke 18 von 3 bis 8 mm werden dann mit einem flüssigen Flammschutzmittel getränkt, wobei nach dem Tränken der Platten diese Quetschwalzen durchlaufen, um eine gleichmäßige Verteilung des flüssigen Flammschutzmittels 19 über die Oberfläche der Zellstruktur 20 zu erhalten. Ein derartiges flüssiges Flammschutzmittel kann aus einem Polyurethan der Type 64 (der Firma Bayer) gebildet sein, von welchem 100 Gewichtsteile mit 80 Gewichtsteilen Al (OH)3 vermischt werden. Dieses Aluminiumoxyhydrat wird in das Polyurethan eingerührt. Bevorzugt soll die Korngrößenverteilung dieses pulverförmigen Flammschutzmittels 14 die nachstehende Korngrößenverteilung aufweisen:

104 bis 40 µm maximal 4%
40 bis 10 µm 45 bis 60%
10 bis 2 µm 20 bis 45%
2 bis 0,2 µm 5 bis 15%.

Die Viskosität einer derartigen Mischung zwischen Polyurethan und Aluminiumoxyhydrat soll 390 cp/25°C betragen.

Versuche haben gezeigt, daß bei einer entsprechenden Tränkung der die Zwischenschicht 8 bildenden Platten aus Kunststoffschaum die Richtlinien für den vorbeugenden Brandschutz bei Personenfahrzeugen eingehalten werden können. Diese richten sich nach den Brandschutzlinien für Straßenbahnfahrzeuge und der Verwendung über den Bau und Betrieb der Straßenbahnen. Eine derart aufgebaute Polsterung 3 ermöglicht die Verwendung der Polsterung unabhängig davon, ob sie in ein Stützgerüst eingesetzt ist oder selbsttragend ausgebildet ist, für die Anwendung bei Fahrgastsitzen. Ist die Polsterung 3 selbsttragend ausgebaut, kann der Rückenpolster und der Sitzpolster einstückig ausgeführt sein und es reicht, wenn dieser über entsprechend eingearbeitete Befestigungsmittel auf einem Rohrgerüst oder dgl. befestigt werden.

Bei Verwendung des vorbeschriebenen flüssigen Flammschutzmittels zum Tränken der Zwischenschicht 8 wird in vorteilhafter Weise ein sehr niedriger Halogengehalt, eine geringe Rauchenwicklung und eine hohe Lichtechtheit erreicht. Außerdem entsteht bei der Verwendung eines derartigen flüssigen Flammschutzmittels keine Hydrolisierung des Kunststoffschaumes.

Eine derart aufgebaute Polsterung widersteht auch dem bei den vorgenannten Brandschutzrichtlinien für Fahrzeuge, insbesondere Straßenbahnfahrzeugen üblichen Papierkissentest, bei welchem der schwer entflammbare Bezugstoff 7 kreuzförmig eingeschnitten und die Bezugstoffteile von der Zwischenschicht abgelöst werden, worauf in diesem geöffneten Quadrat ein brennendes Papierkuvert eingelegt wird.

Die Versuche für die Herstellung von Sitzen unter der Verwendung der erfindungsgemäßen Polsterung haben ergeben, daß die flammfesten Bezugstoffe üblicherweise ein sehr geringes Dehnungsverhalten aufweisen. Um nun vor allem die Herstellung eines einstückigen Sandwichelementes möglichst in einem einzigen Arbeitsvorgang zu ermöglichen, ohne daß unzulässige Dehnungen auf den Bezugstoff ausgeübt werden, ist es vorteilhaft, wenn der Bezugstoff vor dem Einlegen in die Form zur Verbindung mit der Zwischenschicht und der Sperrfolie bzw. gegebenenfalls dem Stützelement befeuchtet und anschließend im feuchten Zustand über ein Modell gedehnt und in seiner gedehnten Lage am Modell bzw. in der Form getrocknet wird. Dadurch ist est möglich, ohne Überbeanspruchung von einzelnen Fäden des Bezugstoffes diesem die gewünschte Raumform zu vermitteln sodaß das Aufkleben der Zwischenschicht einwandfrei möglich ist.

Im Rahmen der Erfindung stellt das Verfahren zur Herstellung der erfindungsgemäßen Polsterung insbesondere das Nadeln und bzw. oder Tränken der Zwischenschicht und bzw. oder das Dehnen des Bezugstoffes jeweils eine eigene gegebenenfalls von der übrigen Ausbildung der Polster eigenständige Lösung dar.

Bei einer anderen Ausführungsform des erfindungsgemäßen Sitzes hat sich gezeigt, daß besondere Vorteile dann erzielt werden können, wenn die Flammschutzmittel Melaminharz und Aluminiumhydroxyd gemeinsam verwendet werden. Durch die Vermischung von Melaminharz und Aluminiumhydroxyd können die Vorteile der beiden Flammschutzmaterialien miteinander kombiniert werden. Vor allem kann gegen- über der ausschließlichen Verwendung von Aluminiumhydroxyd die Rauchgasentwicklung verringert werden. Durch die Verwendung der festen Flammschutzmitteln wird eine höhere Festigkeit des Stützelementes 13 gegen ein Durchfallen erzielt. Weiters wird die Dochtwirkung und die Rauchentwicklung verringert. Darüberhinaus wird ein Abtropfen von brennenden Materialbestandteilen verhindert. Dies wird vor allen dann erreicht, wenn bei einem Sitzaufbau, bestehend aus Bezugstoff und einem unmittelbar darunter angeordneten Stützelement 13 50 bis 60 Gewichtsteile des flüssigen Kunststoffes aus Flammschutzmittel, wie Melaminharz und Aluminiumhydroxyd bestehen. Die Gewichtsanteile des Flammschutzmittels verteilen sich etwa zu gleichen Teilen auf Malaminharz und Aluminiumhydroxyd.

Bei Verwendung eines flüssigen Kunststoffmaterials zur Herstellung eines Sitzes ist es nunmehr möglich, Webveloure und Kunstleder direkt mit einem Stützelement 13 zu Hinterschäumen, wobei diese Stoffe keinen zusätzlichen eigenen Flammschutz benötigen. Der Webvelour besteht dabei bevorzugt aus 70% Polyester und 30% reiner Wolle.

Wird dagegen eine Zwischenschicht 8 zwischen dem Bezugstoff 7 und dem Stützelement 13 angeordnet, kann der Anteil an Flammschutzmittel auf ca. 30 bis 40 Gewichtsteile vermindert werden. In diesem Fall können als Bezugstoffe 7 Gewirke aus Polyester und reiner Wolle im Verhältnis von 70:30 oder reine Wolle verwendet werden.

. Bei Verwendung einer derartigen flüssigen Kunststoffmischung zur Herstellung von Stützelementen 13 hat es sich als günstig erwiesen, den Mischkopf einer Kunststoffverarbeitungsmaschine mit zumindest vier Vorratsbehältern zu verbinden. In einem dieser Vorratsbehälter ist Polyol, im zweiten Isozyanat und in einem weiteren dritten Vorratsbehälter Treibmittel, z.B. Frigen oder Fluortrichlormethan enthalten. Im vierten Vorratsbehälter wird eine Mischung aus Melaminharz und Aluminiumhydroxyd mit Polyol angesetzt. Diese Mischung besteht aus 50% Polyol, welches bevorzugt identisch ist mit dem Polyol in dem ersten Vorratsbehälter, während die restlichen 50 Gewichtsteile sich gleichmäßig auf Melaminharz und Aluminiumhydroxyd aufteilen.

Der Vorteil dieser Lösung liegt darin, daß im vierten Vorratsbehälter eine hohe Konzentration von festem bzw. pulverförmigem Flammschutzmittel im Polyol erhalten wird, wodurch eine Entmischung während des Verarbeitens des flüssigen Kunststoffes verhindert wird.

Vorteilhaft ist bei einem derartigen Verarbeitungsverfahren unter Einsatz einer vorbeschriebenen Maschine, daß die Reaktionstemperatur ungefähr 70°C bis 100°C beträgt und die Reaktion mit Eigenwärme erfolgt. Dadurch wird keine Zusatztemperatur zum Ausformen benötigt. Das Schaumgewicht des Kunststoffschaumes wird um das Gewicht der Zusatzmaterialien leichter angesetzt, sodaß das Gesamtraumgewicht des Schaumes, welches vorteilhafterweise zwischen 50 bis 100 kg, insbesondere zwischen 70 und 80 kg/m³ liegt, zu erreichen.

Desweiteren ist es vorteilhaft, vor einer mechanischen Beanspruchung der Sitze diese zwölf Stunden zu lagern, bis die endgültige Schaumreaktion abgeschlossen ist.

Die Vorteile der Verwendung eines festen Flammschutzmittels liegen weiters auch darin, daß durch sinnvolle Kombination mit einer Zwischenschicht eine Vielzahl von unterschiedlichen Bezugstoffen 7 für die Herstellung von Sitzen 1 verwendet werden können. Dadurch wird eine hohe Flexibilität bei der Produktion von Sitzen 1 ermöglicht.

## Patentansprüche

1. Sitz, insbesondere für öffentliche Verkehrsmittel, mit einem Traggestell und mit einer aus mehreren Schichten bestehenden Polsterung, die einen schwer entflammbaren Bezugstoff und ein aus Kunststoffschaum bestehendes, mit einem Flammschutzmittel versetztes Stützelement umfaßt, dadurch gekennzeichnet, daß der Kunststoff des Stützelementes (13) mit einem pulverförmigen Flammschutzmittel (14) versetzt ist.

2. Sitz nach Anspruch 1, dadurch gekennzeichnet, daß der Kunststoff für das Stützelement (13) durch Formkaltschaum gebildet ist und ein Raumgewicht von 40 bis 80 kg/m³ aufweist und 100 Gewichtsteile Formkaltschaum mit ca. 20 bis 50, bevorzugt mit ca. 35 Gewichtsteilen pulverförmigem Flammschutzmittel (14) versetzt sind.

3. Sitz nach Anspruch 1 oder 2, dadurch gekennzeichnet, daß das Stützelement mit ca. 50 bis 60 Gewichtsteilen pulverförmigem Flammschutzmittel (14) versetzt ist.

4. Sitz nach einem oder mehreren der Ansprüche 1 bis 3, dadurch gekennzeichnet, daß das pulverförmige Flammschutzmittel (14) durch Melaminharz und bzw. oder Aluminiumhydroxyd und bzw. oder Amonpolyphosphat gebildet ist.

5. Sitz nach einem oder mehreren der Ansprüche 1 bis 4, dadurch gekennzeichnet, daß das pulverförmige Flammschutzmittel (14) jeweils ca. zu gleichen Teilen durch Melaminharz und Aluminiumhydroxyd gebildet ist.

6. Sitz nach einem oder mehreren der Ansprüche 1 bis 5, dadurch gekennzeichnet, daß zwischen dem Bezugstoff (7) und dem Stützelement (13) eine weitere aus Polyätherschaum bestehende Zwischenschicht (8) angeordnet ist, die mit Flammschutzmittel (19) getränkt ist.

7. Sitz nach einem oder mehreren der Ansprüche 1 bis 6, dadurch gekennzeichnet, daß das Stützelement (13) parallel zur Beanspruchungsrichtung—Pfeil 15—eine Dicke von 2 bis 10 cm aufweist.

8. Sitz nach einem oder mehreren der Ansprüche 1 bis 7, dadurch gekennzeichnet, daß zwischen der Zwischenschicht (8) und dem Stützelement (13p eine feuchtigkeitsdichte Sperrfolie (11), insbesondere eine PE- oder PU-Folie, insbesondere mit einer Dicke von 50 μm angeordnet ist.

9. Sitz nach einem oder mehreren der Ansprüche 1 bis 8, dadurch gekennzeichnet, daß der Kunststoffschaum der Zwischenschicht (8) ein Raumgewicht von 25 bis 35 kg/m³ und eine Dicke von 3 bis 8 mm aufweist.

10. Sitz nach einem oder mehreren der Ansprüche 1 bis 9, dadurch gekennzeichnet, daß der Kunststoff der Zwischenschicht (8) mit 5 bis 10 Gewichtsteilen flüssigem, z.B. chlor-, brom- oder phosphorhaltigem Flammschutzmittel (10) versetzt ist und zusätzlich mit einem flüssigen Flammschutzmittel (19) getränkt ist.

11. Sitz nach einem oder mehreren der Ansprüche 1 bis 10, dadurch gekennzeichnet, daß das flüssige Flammschutzmittel (19) mit Aluminiumoxyhydrat vermischt ist, dessen Korngrößenverteilung vorzugsweise 4% 104 bis 40 μm, 45% bis 60% 40 bis 10 μm, 20 bis 45% 10 bis 2 μm und 5 bis 15% 2 bis 0,2 μm beträgt.

12. Sitz nach einem oder mehreren der Ansprüche 1 bis 11, dadurch gekennzeichnet, daß das flüssige Flammschutzmittel (19) aus 100 Gewichtsteilen Polyurethan und ca. 80 Gewichtsteilen Al (OH)3 besteht und vorzugsweise die Viskosität der Mischung 390 cp/25°C beträgt und gegebenenfalls 0,18 Gewichtsteile Entschäumungsmittel und bzw. oder Farbpasten zugesetzt sind.

13. Sitz nach einem oder mehreren der Ansprüche 1 bis 12, dadurch gekennzeichnet, daß der Kunststoff der Zwischenschicht (8) durch ein Polyäther gebildet ist und die Zwischenschicht einen Teil eines Kunststoffschaumblockes bildet.

14. Sitz nach einem oder mehreren der Ansprüche 1 bis 13, dadurch gekennzeichnet, daß der Bezugstoff (7) mit der Zwischenschicht (8) über eine Kleberschicht verbunden ist und die zwischen der Zwischenschicht (8) und dem Stützelement (13) angeordnete Sperrfolie (11) an der Zwischenschicht (8) festgeklebt und das Stützelement (13) auf die Sperrfolie (11) aufgeschäumt ist.

15. Sitz nach einem oder mehreren der Ansprüche 1 bis 14, dadurch gekennzeichnet, daß der Bezugstoff (7) und die Zwischenschicht (8) sowie die Sperrfolie (11) und das Stützelement (13) ein selbsttragendes Sandwichelement bilden.

16. Sitz nach einem oder mehreren der Ansprüche 1 bis 15, dadurch gekennzeichnet, daß der Bezugstoff (7) durch einen Webvelour insbesondere mit einem Anteil von 70% Polyester und 30% Wolle oder durch Kunstleder gebildet ist und das Stützelement (13) auf dem Bezugstoff (7) aufgeschäumt ist.

17. Sitz nach einem oder mehreren der Ansprüche 1 bis 16, dadurch gekennzeichnet, daß der Bezugstoff (7) durch ein Polyester-Wolle-Gewirke insbesondere mit Anteil von 70% Polyester und 30% Wolle oder durch reine Wolle gebildet ist.

18. Maschine zum Herstellen eines Sitzes nach einem oder mehreren der Ansprüche 1 bis 17, dadurch gekennzeichnet, daß ein Mischkopf mit einem Vorratsbehälter für Polyol, einem Vorratsbehälter für Isozyanat und einem Vorratsbehälter für ein Gemisch von 50 Gewichtsteilen Melaminharz und Aluminiumhydroxyd und 50 Gewichtsteilen Polyol und einem weiteren Vorratsbehälter mit einem z.B. durch Frigen oder Fluortrichlormethan gebildeten Treibmittel verbunden ist.

19. Maschine nach Anspruch 18, dadurch gekennzeichnet, daß das in den Vorratsbehältern verwendete Polyol gleiche Zusammensetzung aufweist.

20. Verfahren zum Herstellen eines Sitzes, insbesondere für öffentliche Verkehrsmittel, bei welchem ein Stützelement aus einem mit Flammschutzmitteln versehenen Kunststoff in einer Form geschäumt und mit einem schwer entflammbaren Bezugstoff verbunden wird, dadurch gekennzeichnet, daß das Stützelement auf eine mit einer ebenfalls aus Kunststoffschaum bestehenden Zwischenschicht verbundene Sperrfolie aufgeschäumt wird und daß nach dem Schäumen des Stützelementes von der Zwischenschicht in Richtung des Stützelementes insbesondere erhitzte Nadeln durch die Sperrfolie hindurch bis in den dieser zugewandten Bereich des Stützelementes eingedrückt und anschließend herausgezogen werden.

21. Verfahren nach Anspruch 20, dadurch gekennzeichnet, daß die Nadeln verteilt über die gesamte Oberfläche der Zwischenschicht durch die Sperrfolie hindurchgedrückt werden.

22. Verfahren nach einem der Ansprüche 20 oder 21, dadurch gekennzeichnet, daß die Summe der Querschnittsflächen der mit den Nadeln zumindest in der Sperrfolie hergestellten Öffnungen einen Luftdurchsatz von 30 Liter/min ermöglichen.

23. Verfahren nach einem der Ansprüche 20 oder 21, dadurch gekennzeichnet, daß auf der der Sperrfolie gegenüberliegenden Oberfläche der Zwischenschicht der flammfeste Bezugstoff aufkaschiert ist und daß der Bezugstoff vor dem Aufkaschieren befeuchtet und über ein räumliches Modell gedehnt und in der gedehnten Lage getrocknet wird.

## Revendications

1. Siège, en particulier pour transports publics, avec un cadre porteur et avec un rembourrage se composant de plusieurs couches qui comporte une étoffe de revêtement difficilement inflammable et un élément de support se composant d'une mousse de matière synthétique, mélangée à un agent ignifuge, caractérisé en ce que la matière synthétique de l'élément de support (13) est mélangée à un agent ignifuge pulvérulent (14).

2. Sièges selon la revendication 1, caractérisé en ce que la matière synthétique pour l'élément de support (13) est formée en mousse formée à froid et présente un poids spécifique de 40 à 80 kg/m³ et en ce que 100 parties en poids de mousse formée à froid sont mélangées à environ 20 à 50, de préférence à environ 35 parties en poids de l'agent ignifuge pulvérulent (14).

3. Sièges selon la revendication 1 ou 2, caractérisé en ce que l'élément de support est mélangé à environ 50 à 60 parties en poids de l'agent ignifuge pulvérulent (14).

4. Sièges selon l'une quelconque des revendications 1 à 3, caractérisé en ce que l'agent ignifuge pulvérulent (14) est formé d'une résine mélamine et/ou d'hydroxyde l'aluminium et/ou de polyphosphate d'amonium.

5. Siège selon l'une quelconque des revendications 1 à 4, caractérisé en que l'agent ignifuge pulvérulent (14) est formé à peu près en proportions identiques de résine mélamine et d'hydroxyde d'aluminium.

6. Siège selon l'une quelconque des revendications 1 à 5, caractérisé en ce qu'entre l'étoffe de revêtement (7) et l'élément de support (13) est agencée une autre couche intermédiaire (8) se composant d'une mousse de polyéther, qui est imbibée d'un agent ignifuge (19).

7. Siège selon l'une quelconque des revendications 1 à 6, caractérisé en ce que l'élément de support (13) présente, parallèlement à la direction de sollicitation, flèche 15, une épaisseur de 2 à 10 cm.

8. Siège selon l'une quelconque des revendications 1 à 7, caractérisé en ce qu'entre la couche intermédiaire (8) et l'élément de support (13) est agencée une feuille d'arrêt (11) étanche à l'humidité, en particulier une feuille en PE ou PU, ayant en particulier une épaisseur de 50 µm.

9. Siège selon l'une quelconque des revendications 1 à 8, caractérisé en ce que la mousse de matière synthétique de la couche intermédiaire (8) présente un poids spécifique de 25 à 35 kg/m$^3$ et une épaisseur de 3 à 8 mm.

10. Siège selon l'une quelconque des revendications 1 à 9, caractérisé en ce que la matière synthétique de la couche intermédiaire (8) est mélangée à 5 à 10 parties en poids d'un agent ignifuge liquide (10) contenant, par exemple, du chlore, du brome ou du phosphore et est de plus imbibée d'un agent ignifuge liquide (19).

11. Siège selon l'une quelconque des revendications 1 à 10, caractérisé en ce que l'agent ignifuge liquide (19) est mélangé à de l'hydroxyde d'aluminium dont la composition granulométrique est avantageusement pour 4%, de 104 à 40 µm, pour 45 à 60%, de 40 à 10 µm, pour 20 à 45%, de 10 à 2 µm et pour 5 à 15%, de 2 à 0,2 µm.

12. Siège selon l'une quelconque des revendications 1 à 11, caractérisé en ce que l'agent ignifuge liquide (19) se compose de 100 parties en poids de polyuréthane et d'environ 80 parties en poids de Al (OH)$_3$ et avantageusement la viscosité de mélange est de 390 cp/25°C et le cas échéant on y ajoute 0,18 partie en poids d'un agent antimousse et/ou de pâte colorante.

13. Siège selon l'une quelconque des revendications 1 à 12, caractérisé en ce que la matière synthétique de la couche intermédiaire (8) est formée d'un polyester et la couche intermédiaire forme une partie d'un bloc de mousse de matière synthétique.

14. Siège selon l'une quelconque des revendications 1 à 13, caractérisé en ce que l'étoffe de revêtement (7) est reliée à la couche intermédiaire (8) par une couche de colle et la feuille d'arrêt (11) agencée entre la couche intermédiaire (8) et l'élément de support (13) est collée solidement à la couche intermédiaire (8) et l'élément de support (13) est formé par mousse sur la feuille d'arrêt (11).

15. Siège selon l'une quelconque des revendications 1 à 14, caractérisé en ce que l'étoffe de revêtement (7) et la couche intermédiaire (8) ainsi que la feuille d'arrêt (11) et l'élément de support (13) forment un élément en sandwich autonome.

16. Siège selon l'une quelconque des revendications 1 à 15, caractérisé en ce que l'étoffe de revêtement (7) est formée d'un velours tissé contenant en particulier 70% de polyester et 30% de laine ou bien d'unn cuir artificiel et en ce que l'élément de support (13) est formé par mousse sur l'étoffe de revêtement (7).

17. Siège selon l'une quelconque des revendications 1 à 16, caractérisé en ce que l'étoffe de revêtement (7) est formée d'un tissu à mailles de laine-polyester, contenant en particulier 70% de polyester et 30% de laine ou bien de pure laine.

18. Machine pour la fabrication d'un siège selon l'une quelconque des revendications 1 à 17, caractérisée en ce qu'une tête de mélange est reliée à un réservoir de stockage du polyol, un réservoir de stockage de l'isocyanate et un réservoir de stockage d'un mélange de 50 parties en poids de résine mélamine et d'hydroxyde d'aluminium et de 50 parties en poids de polyol et à un autre réservoir de stockage avec un agent moussant formé par exemple de Fréon ou de fluorotrichlorométhane.

19. Machine selon la revendication 18, caractérisée en ce que les polyols utilisés dans les réservoirs de stockage présentent la même composition.

20. Procédé pour la fabrication d'un siège, en particulier pour transports publics, du type où on fait mousser, dans un moule, un élément de support en une matière synthétique pourvue d'un agent ignifuge et on le relie à une étoffe de revêtement difficilement inflammable, caractérisé en ce qu'on fait mousser l'élément de support en partant d'une feuille d'arrêt reliée à une couche intermédiaire se composant également d'une mousse de matière synthétique et en ce qu'après formation de mousse de l'élément de support, des aiguilles chauffées sont introduites, à partir de la couche intermédiaire, dans la direction de l'élément de support, à travers la feuille d'arrêt, et sont pressées dans la zone de l'élément de support qui leur fait face et ensuite sont ressorties.

21. Procédé selon la revendication 20, caractérisé en ce que les aiguilles sont réparties sur toute la surface de la couche intermédiaire et pressées à travers la feuille d'arrêt.

22. Procédé selon l'une quelconque des revendications 20 ou 21, caractérisé en ce que la somme des surfaces en section transversale des ouvertures produites, par les aiguilles, au moins dans la feuille d'arrêt, permet un passage de l'air de 30 l/mn.

23. Procédé selon l'une quelconque des revendications 20 ou 21, caractérisé en ce que l'étoffe de revêtement résistant au feu est contrecollée sur la surface de la couche intermédiaire opposée à la feuille d'arrêt et en ce que l'étoffe de revêtement, avant contrecollage, est humidifiée et tendue au dessus d'un gabarit dans l'espace et est séchée à la position tendue.

**Claims**

1. Seat, in particular for public transport, with a supporting frame and with a padding consisting of several layers, which comprises a flame-resistant covering material and a support element, consisting of plastics foam, which is mixed with a fireproofing agent, characterized in that the plastics material of the support element (13) is mixed with a pulverulent fireproofing agent (14).

2. Seat according to Claim 1, characterized in that the plastics material for the support element (13) is formed by cold forming foam and has a density of 40 to 80 kg/m³, and 100 parts by weight of cold forming foam are mixed with approximately 20 to 50, preferably with approximately 35 parts by weight of pulverulent fireproofing agent (14).

3. Seat according to Claim 1 or 2, characterized in that the support element is mixed with approximately 50 to 60 parts by weight of pulverulent fireproofing agent (14).

4. Seat according to one or more of Claims 1 to 3, characterized in that the pulverulent fireproofing agent (14) is formed by melamine resin and/or aluminium hydroxide and/or ammonium polyphosphate.

5. Seat according to one or more of Claims 1 to 4, characterized in that the pulverulent fireproofing agent (14) is formed in each case approximately in identical portions by melamine resin and aluminium hydroxide.

6. Seat according to one or more of Claims 1 to 5, characterized in that between the covering material (7) and the support element (13) a further intermediate layer (8) is arranged, consisting of polyether foam, which is impregnated with fireproofing agent (19).

7. Seat according to one or more of Claims 1 to 6, characterized in that the support element (13) parallel to the direction of stress—arrow 15—has a thickness of 2 to 10 cm.

8. Seat according to one or more of Claims 1 to 7, characterized in that between the intermediate layer (8) and the support element (13) a damp-proof barrier film (11), in particular a PE- or PU-film, is arranged, in particular with a thickness of 50 μm.

9. Seat according to one or more of Claims 1 to 8, characterized in that the plastics foam of the intermediate layer (8) has a density of 25 to 35 kg/m³ and a thickness of 3 to 8 mm.

10. Seat according to one or more of Claims 1 to 9, characterized in that the plastics material of the intermediate layer (8) is mixed with 5 to 10 parts by weight of liquid fireproofing agent (10), e.g. containing chlorine, bromine or phosphorus, and is additionally impregnated with a liquid fireproofing agent (19).

11. Seat according to one or more of Claims 1 to 10, characterized in that the liquid fireproofing agent (19) is mixed with aluminium hydroxide, the grain size distribution of which is preferably 4% 104 to 40 μm, 45% to 60% 40 to 10 μm, 20 to 45% 10 to 2 μm and 5 to 15% 2 to 0.2 μm.

12. Seat according to one or more of Claims 1 to 11, characterized in that the liquid fireproofing agent (19) consists of 100 parts by weight of polyurethane and approximately 80 parts by weight of Al (OH)3, and preferably the viscosity of the mixture is 390 cp/25°C and if necessary 0.18 parts by weight of defoaming agent and/or colour pastes are added.

13. Seat according to one or more of Claims 1 to 12, characterized in that the plastics material of the intermediate layer (8) is formed by a polyether, and the intermediate layer forms a part of a plastics foam block.

14. Seat according to one or more of Claims 1 to 13, characterized in that the covering material (7) is connected with the intermediate layer (8) by means of an adhesive layer, and the barrier film (11), which is arranged between the intermediate layer (8) and the support element (13), is securely adhered to the intermediate layer (8) and the support element (13) is foamed onto the barrier film (11).

15. Seat according to one or more of Claims 1 to 14, characterized in that the covering material (7) and the intermediate layer (8) and also the barrier film (11) and the support element (13) form a self-supporting sandwich element.

16. Seat according to one or more of Claims 1 to 15, characterized in that the covering material (7) is formed by a woven velour in particular with a proportion of 70% polyester and 30% wool or by synthetic leather, and the support element (13) is foamed on the covering material (7).

17. Seat according to one or more of Claims 1 to 16, characterized in that the covering material (7) is formed by a knitted fabric of polyester/wool, in particular with a proportion of 70% polyester and 30% wool, or by pure wool.

18. Machine for the production of a seat according to one or more of Claims 1 to 17, characterized in that a mixing head is connected with a storage vessel for polyol, with a storage vessel for isocyanate and with a storage vessel for a mixture of 50 parts by weight of melamine resin and aluminium hydroxide and 50 parts by weight polyol and with a further storage vessel with a propellant formed for example by freon or fluorotrichloromethane.

19. Machine according to Claim 18, characterized in that the polyol used in the storage vessels has the same composition.

20. Method for the production of a seat, in particular for public transport, in which a support element of a plastics material provided with fireproofing agents is formed in a mould and is connected with a flame-resistant covering material, characterized in that the support element is formed onto a barrier film, which is connected with an intermediate layer likewise consisting of plastics foam, and that after the foaming of the support element, from the intermediate layer in the direction of the support element in particular heated needles are pressed through the barrier film into the region of the support element facing thereto, and are then withdrawn.

21. Method according to Claim 20, characterized in that the needles are pressed through the barrier film in a distributed manner over the entire surface of the intermediate layer.

22. Method according to one or more of Claims 20 or 21, characterized in that the sum of the cross-sectional areas of the openings produced with the needles at least in the barrier film make possible a throughput of air of 30 litres/min.

23. Method according to one of Claims 20 or 21, characterized in that on the surface of the intermediate layer lying opposite the barrier film, the fireproof covering material is laminated on, and that the covering material, before laminating, is moistened and stretched over a three-dimensional model and is dried in the stretched position.

**Fig.1**

**Fig.3**

**Fig.2**